# EUROPEAN PATENT APPLICATION

(11) **EP 4 027 492 A1**
(43) Date of publication of application: **13.07.2022**
(21) Application number: 21179193.4
(22) Date of filing: 14.06.2021
(51) Int. Cl.: H02K 3/20

(54) **INTEGRAL DAMPING WINDING, ROTOR AND MOTOR**

(30) Priority: 08.01.2021 CN 202110020702
(71) Applicant: University of Nottingham Ningbo China, Ningbo, Zhejiang 315100 (CN)
(72) Inventor: WANG, Yinli, NINGBO, ZHEJIANG, 315100 (CN); Nuzzo, Stefano, NINGBO, ZHEJIANG, 315100 (CN); Gerada, Christopher, NINGBO, ZHEJIANG, 315100 (CN); ZHANG, He, NINGBO, ZHEJIANG, 315100 (CN); ZHAO, Weiduo, NINGBO, ZHEJIANG, 315100 (CN); Galea, Michael, NINGBO, ZHEJIANG, 315100 (CN)
(74) Representative: 2K Patentanwälte Blasberg Kewitz & Reichel

(57) **Abstract**

An integral damping winding is provided which comprises two short circuit connecting pieces and at least two integral damping bars, wherein all integral damping bars are mounted between two adjacent rotor poles respectively, and two ends of each of the integral damping bars is connected with the short circuit connecting pieces respectively, and the integral damping bar is made of a conductive soft magnetic material, group of integral damping bars are integrated into one entire structure, increasing the bearing capacity of the integral damping bar. The present disclosure also provides a rotor and motor applying the integral damping winding. Under a variable frequency working condition, a large amount of current will be generated in the integral damping bar disposed between rotor poles, resulting in heat generation. Further, the integral damping bar can easily contact with a cooling medium, helping cool the integral damping bar, and reduce its thermal bending force, which is convenient for the integral damping winding to reduce the temperature and the thermal bending force.

## Description

### TECHNICAL FIELD

The present invention relates to the field of motor technologies, and in particular to an integral damping winding, and a rotor and a motor, in particular an electric motor, applied to the same.

### BACKGROUND

Because the existing salient pole synchronous excitation motor is limited by a salient pole structure of a rotor, the harmonic number of air gap magnetic induction intensity is usually large, which increases the difficulty of reducing the number of total harmonic distortions of a terminal voltage of the salient pole synchronous electric excitation motor. At the same time, a damping bar winding structure is embedded in an outer cylindrical surface of the rotor of the salient pole motor. Under a variable frequency working condition, a large amount of current will be produced in the damping bar winding, resulting in heat generation. It is difficult for the damping winding embedded in a yoke of the rotor of the motor to contact with a cooling medium, which increases the difficulty in cooling the rotor.

For example, Chinese utility model patent with the publication number CN2765379Y discloses a miniature bipolar unidirectional generator rotor in which a damping bar is made of copper or aluminum. Chinese utility model patent with the publication number CN207234636U discloses a damping winding of a salient pole unidirectional generator, in which a damping bar is a red copper cylindrical bar.

In the prior art, a damping bar is embedded in a magnetic slot in an iron core of a rotor. Due to current crowding effect of the damping bar in a startup process, non-uniform temperature rise will occur to the damping bar, causing the damping bar to produce a center-faced bending stress; in the operation process of the rotor, the damping bar produces forced vibration under the alternating actions of an electromagnetic force and a centripetal force. Coupled with other stresses suffered by the damping bar, the damping bar will easily break when the stress exceeds a limit that the damping bar can withstand. Limited by circumferential uniform distribution of a plurality of damping bars along pole shoes in the prior art, the bearing capacity of a single damping bar is poor. In the prior art, the disposal of the damping bars limits the structural strength of a single damping bar, further affecting the service life of the damping bar.

### SUMMARY

In order to overcome the above technical problems, the present invention provides an integral damping winding in which one group of damping bars are integrated into one entire structure, thus increasing the bearing capacity of the integral damping bar. Under a variable frequency working condition, a large amount of current will be generated in the integral damping bar disposed between rotor poles, resulting in heat generation. Further, the integral damping bar can easily contact with a cooling medium, helping cool the integral damping bar, and reduce its thermal bending force.

The technical solution employed by the present invention provides an integral damping winding comprising two short circuit connecting pieces and at least two integral damping bars. All integral damping bars are mounted between two adjacent rotor poles respectively, two ends of each of the integral damping bars is connected with the short circuit connecting pieces respectively, and the integral damping bar is made of a conductive soft magnetic material.

In the present invention, the short circuit connecting pieces may not only form a circuit loop of squirrel-cage structure with a plurality of integral damping bars, but also be sleeved on the periphery of the plurality of integral damping bars and fixed.

Preferably, a single integral damping bar comprises a left-right limiting portion, two wing plates and two front-back limiting portions. The wing plates are disposed at both sides of the left-right limiting portion respectively and the front-back limiting portions are disposed at front and rear ends of the wing plates or the left-right limiting portion respectively.

Preferably, the wing plate is fixed between an excitation winding and a pole shoe of the rotor pole.

Preferably, an arc-shaped surface matching with a surface of the rotor pole is disposed on an upper surface of the left-right limiting portion.

Preferably, the conductive soft magnetic material comprises martensitic stainless steel or electrical steel.

Provided is a rotor comprising a rotor iron core and an integral damping winding. An even number of rotor poles are disposed on the rotor iron core, an excitation winding is disposed on each rotor pole, a plurality of integral damping bars are disposed between two adjacent rotor poles respectively, and two short circuit connecting pieces are disposed at front and rear ends of the rotor iron core respectively.

Preferably, a magnetic induction intensity of the integral damping bar under any magnetic field intensity should always be smaller than a magnetic induction intensity of the rotor iron core under the magnetic field intensity.

Preferably, in a BH linear interval of the rotor iron core, a magnetic permeability of the integral damping bar should always be smaller than a magnetic permeability of the rotor iron core.

Provided is a motor comprising a stator and a rotor. An integral damping bar is used to mount the rotor inside the stator.

Preferably, the motor is a variable-speed, variable-frequency synchronous electric excitation motor with a rotation speed interval between 0-20000 r/min. The motor to which the integral damping winding rotor is applied has a small fluctuation of THD value in different rotation speed intervals and thus suitable for the variable-speed, variable-frequency synchronous electric excitation motor. In contrast, the traditional salient pole motor has a large fluctuation of THD value in different rotation speed intervals, and a constant rotation speed of the traditional salient pole motor is a rotation speed at the minimum THD value, for example, the traditional four-pole salient pole motor has a constant rotation speed of 1500 r/min.

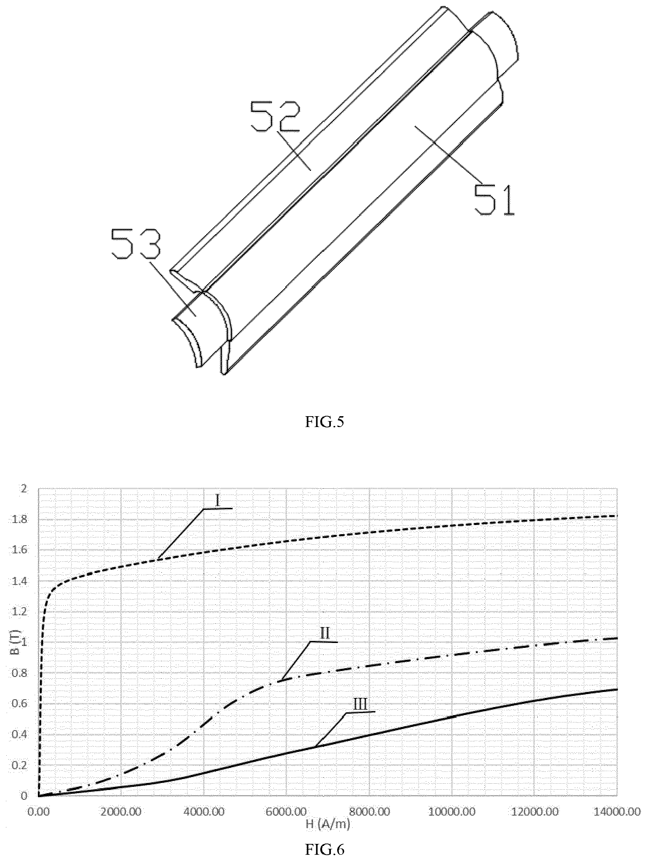

Compared with the prior art, the present invention has the following advantages.
1. In a case of change of load, the voltage and the current in the winding of the generator to which the integral damping winding is applied will form an oscillation process, and a saturation degree of one pole of the synchronous electric excitation motor in a load working condition is higher than that of other positions of a ferromagnetic material of the rotor. Partial magnetic field in a main flux will seek a new low-reluctance channel outside the pole shoe of the rotor. Because the integral damping winding is mounted between two rotor poles, the flux overflowing from the main flux will flow through the pole shoe and an air gap to reach the position of another rotor pole from the position of the integral damping bar. At the same time, because the integral damping bar is mounted close to the air gap, high-order harmonic wave in the air gap magnetic field also appears in a magnetic field passing through the integral damping bar. In a load change process, the magnetic field at the motor rotor side changes correspondingly. According to Faraday law of electromagnetic induction, a changing magnetic field will generate a changing electric field. The changing magnetic field in the integral damping bar will generate an electric field along an axial direction. The changing electric field will generate a changing current in the conductive short-circuited damping winding. The changing current will hinder change of the original magnetic field. Therefore, the oscillation generated by the load change will be neutralized by the current in the integral damping bar, producing a buffering effect.
2. At present, one group of integral damping bars are integrated into one entire structure, increasing the bearing capacity of the integral damping bar. Under a variable frequency working condition, a large amount of current will be generated in the integral damping bar disposed between rotor poles, resulting in heat generation. Further, the integral damping bar can easily contact with a cooling medium, helping cool the integral damping bar, and reduce its thermal bending force. In the operation process of the rotor, the damping bar produces forced vibration under the alternating actions of an electromagnetic force and a centripetal force, bringing little impact to the integral damping bar.
3. The integral damping bar is made of conductive soft magnetic material. With 17-4PH of martensitic stainless steel as conductive soft magnetic material, the 17-4PH reaches a specific BH characteristic after being subjected to H900 heat treatment process, which is shown in the curve numbered II in FIG. 6. When the integral damping bar is applied to a synchronous excitation generator, the rotor iron core of the motor is formed by laminating M235-35A silicon steel sheets. The BH characteristic of the M235-35A silicon steel sheet is shown in the curve numbered I in FIG. 6. It can be seen that a magnetic induction intensity of the integral damping winding under the magnetic field intensity of the synchronous excitation generator is smaller than that of the rotor iron core under the magnetic field intensity. The integral damping bars with magnetic conductivity will construct one low-reluctance channel in a magnetic circuit in the synchronous excitation generator, so that magnetic flux leakage between two poles of the salient pole synchronous motor is utilized by the integral damping bars to enable an air gap magnetic field of the synchronous electric excitation motor to be more sinusoidal than that of the original salient pole synchronous motor. The BH characteristic of the integral damping winding subjected to heat treatment may be such that the ratio of the magnetic flux leakage to the total magnetic flux will not be increased in case that the integral damping winding utilizes the existing magnetic flux leakage, thus avoiding decreasing performance of the motor. With application of the integral damping bars, the electric energy quality of the synchronous electric excitation generator at each rotation speed point under a variable-speed working condition will be significantly improved.
4. When the integral damping bars are applied to the synchronous excitation electric motor, the air gap magnetic field of the salient pole electric excitation motor with the integral damping bars has fewer sinusoidal harmonic waves than that of the traditional synchronous electric excitation motor. A torque generated by the motor is in direct proportion to the current and the air gap magnetic field of the motor. Theoretically, under the precondition of inputting the same current, the motor with more sinusoidal air gap magnetic field will have smaller harmonic torque and smaller torque ripple. Compared with traditional structure, the synchronous electric excitation motor with the integral damping winding has a superior torque ripple ratio under different rotation speed working conditions.

### BRIEF DESCRIPTIONS OF THE DRAWINGS

FIG. 1 is a structural schematic diagram of an end face of a rotor according to an embodiment of the present invention.
FIG. 2 is a structural schematic diagram of an integral damping winding according to an embodiment of the present invention.
FIG. 3 is a stereoscopic diagram of a rotor according to an embodiment of the present invention.
FIGS. 4-5 are structural schematic diagram of a single integral damping winding according to an embodiment of the present invention.
FIG. 6 is a B-H characteristic diagram of integral damping windings made of different materials according to an embodiment of the present invention.
FIG. 7 is a comparison diagram of a simulation value of an output voltage of a rotor at a rotation speed of 500r/min and experimental test data according to a second embodiment.
FIG. 8 is a comparison diagram of a simulation value of an output voltage of a rotor at a rotation speed of 1000r/min and experimental test data according to a second embodiment.
FIG. 9 is a comparison diagram of a simulation value of an output voltage of a rotor at a rotation speed of 1500r/min and experimental test data according to a second embodiment.
FIG. 10 is a comparison diagram of a simulation value of an output voltage of a rotor at a rotation speed of 3000r/min and experimental test data according to a second embodiment.
FIG. 11 is a simulation data comparison diagram under a condition of 0-1 numeral value rotation per minute according to a first control embodiment.

### DETAILED DESCRIPTIONS OF EMBODIMENTS

The technical solution of the present invention will be described clearly and fully below in combination with accompanying drawings. Apparently, the described embodiments are merely some embodiments of the present invention rather than all embodiments. Other embodiments obtained by those skilled in the art based on these embodiments without paying creative work shall all fall within the scope of protection of the present invention.

In the descriptions of the present invention, it is understood that orientation or positional relationship indicated by the terms such as "central", "upper", "lower", "left", "right", "vertical", "horizontal", "inside", and "outside" is used only for ease of descriptions and simplification of descriptions and does not indicate or imply that the indicated devices or elements must have a particular orientation, or be constructed or operated in a particular orientation. Therefore, such terms shall not be understood as limiting of the present invention. Furthermore, the terms such as "first", "second", and "third" are used for the purpose of descriptions only rather than understood as indicating or implying relative importance.

### Embodiment 1

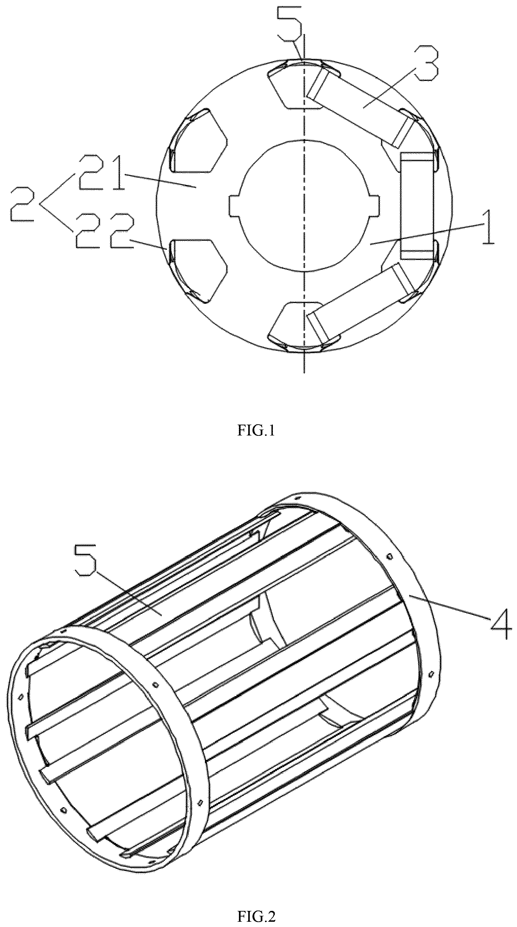

As shown in FIG. 2, the embodiment provides an integral damping winding comprising two short circuit connecting pieces 4 and at least two integral damping bars 5. Two short circuit connecting pieces 4 are spaced apart, all integral damping bars 5 are mounted between the two short circuit connecting pieces4, and two ends of the integral damping bar 5 are connected to the short circuit connecting pieces 4 respectively. In this way, Electrical connection between the integral damping bar 5 and the short circuit connecting piece 4 is realized. All integral damping bars 5 are mounted between two adjacent rotor poles 2 respectively, and the integral damping bar 5 is made of a conductive soft magnetic material.

The conductive soft magnetic material is martensitic stainless steel or electrical steel. The martensitic stainless steel comprises type 17-4PH and type 410. The type 17-4PH comprises 17-4PH H900 and 17-4PH H1150. The electrical steel comprises M235-35A. As shown in FIG. 6, the BH characteristic of the M235-35A material corresponds to linear I , the BH characteristic of the 17-4PH H900 material corresponds to linear II, and the BH characteristic of the 17-4PH H1150 material corresponds to linear III. In this embodiment, the integral damping bar 5 is made of 17-4PH H900.

In this embodiment, the number of the integral damping bars 5 may be six which is not limited herein. The number of integral damping bars 5 depends on the number of rotor poles 2 of the applied motor.

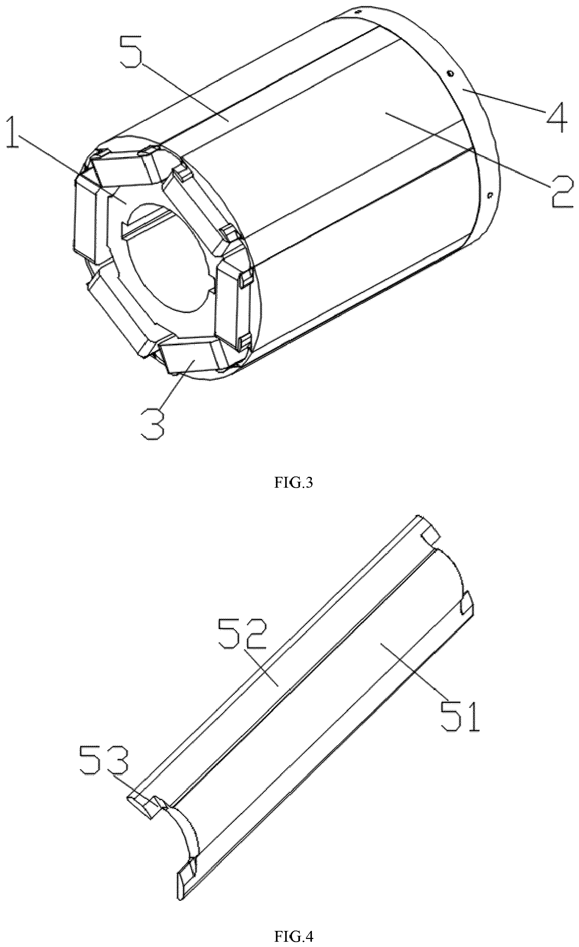

As shown in FIG. 4, in this embodiment, the single integral damping bar 5 comprises a left-right limiting portion 51, a wing plate 52, and a front-back limiting portion 53. The wing plate 52 is disposed on both sides of the left-right limiting portion 51 respectively, and the front-back limiting portion 53 is disposed at front and rear ends of the wing plate 52 respectively. The left-right limiting portion 51 protrudes from a surface of the wing plate 52 and two protruding sides of the left-right limiting portion 51 are abutted against ends of pole shoes of the rotor poles 2 respectively. The front and rear ends of the wing plate 52 are flushed with front and rear ends of the left-right limiting portion 51, and the front-back limiting portions 53 protrude from the front and rear ends of the wing plate 52. The short circuit connecting piece 4 is in interference fit with periphery of a plurality of front-back limiting portions 53 to fix the integral damping bar 5.

As shown in FIG. 5, in another embodiment, the single integral damping bar 5 comprises a left-right limiting portion 51, a wing plate 52, and a front-back limiting portion 53. The wing plate 52 is disposed on both sides of the left-right limiting portion 51 respectively, and the front-back limiting portion 53 is disposed at front and rear ends of the left-right limiting portion 51 respectively. The left-right limiting portion 51 protrudes from a surface of the wing plate 52 and two protruding sides of the left-right limiting portion 51 are abutted against ends of pole shoes 22 of the rotor poles 2 respectively. The front and rear ends of the wing plate 52 are flushed with front and rear ends of the left-right limiting portion 51, and the front-back limiting portions 53 protrude from the front and rear ends of the left-right limiting portion 51. The short circuit connecting piece 4 is in interference fit with periphery of a plurality of front-back limiting portions 53 to fix the integral damping bar 5.

### Embodiment 2

As shown in FIG. 1, the embodiment provides a rotor comprising a rotor iron core 1 and the integral damping winding in the embodiment 1. A shaft hole for receiving a rotary shaft is disposed on the rotor iron core 1 and the rotary shaft is mounted onto the rotor through the shaft hole. An even number of rotor poles 2 are disposed on the rotor iron core 1, an excitation winding 3 is disposed on each rotor pole 2, the integral damping bar 5 is disposed between the rotor poles 2, and the short circuit connecting piece 4 is disposed at front and rear ends of the rotor iron core 1 respectively.

In this embodiment, the material of the rotor iron core 1 is M235-35A and the material of the integral damping bar 5 is 17-4PH H900. As shown in FIG. 6, the BH characteristic of the M235-35A material corresponds to linear I , the BH characteristic of the 17-4PH H900 material corresponds to linear II, and the magnetic induction intensity of the integral damping bar 5 under the respective magnetic field intensities of 2000 amperes per meter, 4000 amperes per meter, 6000 amperes per meter, 8000 amperes per meter, 10000 amperes per meter, 12000 amperes per meter and 14000 amperes per meter is always smaller than the magnetic induction intensity of the rotor iron core 1 under the respective magnetic field intensities.

In another embodiment, the material of the rotor iron core 1 is M235-35A and the material of the integral damping bar 5 is 17-4PH H1150. As shown in FIG. 6, the BH characteristic of the M235-35A material corresponds to linear I , the BH characteristic of the 17-4PH H1150 material corresponds to linear III. In the BH linear interval of the rotor iron core 1, the magnetic permeability of the integral damping bar 5 is smaller than the magnetic permeability of the rotor iron core 1.

In this embodiment, disposal of an even number of rotor poles 2 on the rotor iron core 1 refers to that at least two rotor poles 2 are disposed on the rotor iron core 1. As shown in FIG. 1, six rotor poles 2 are disposed on the rotor iron core 1, that is, the rotor is a six-pole rotor. A single rotor pole 2 comprises a pole body 21 and a pole shoe 22 and the excitation winding is disposed on each pole body 21. One integral damping bar 5 is disposed between two adjacent rotor poles 2, and the six integral damping bars 5 are all made of electro-conductive and magnetically-conductive material. Two short circuit connecting pieces 4 are respectively sleeved on the periphery of the front and rear ends of the front-back limiting portions 53 to construct a complete squirrel-cage damping winding. There is a gap between the pole shoe 22 integrally formed with the pole body 21 along a radial direction of the pole body 21 and the excitation winding 3 wound on the pole body 2, and the wing plate 52 on the single integral damping bar 5 is fixed in the gap. The excitation winding 3 on each rotor pole 2 moves along a peripheral direction of the rotary shaft under the action of a centrifugal force, so as to tightly fix the integral damping bar 5 between the pole shoe 22 and the excitation winding 3.

In another embodiment, disposal of an even number of rotor poles 2 on the rotor iron core 1 refers to that at least two rotor poles 2 are disposed on the rotor iron core 1. As shown in FIG. 1, six rotor poles 2 are disposed on the rotor iron core 1, that is, the rotor is a six-pole rotor. A single rotor pole 2 comprises a pole body 21 and a pole shoe 22 and the excitation winding is disposed on each pole body 21. One damping bar identical to the integral damping bar 5 in shape is disposed between every two adjacent rotor poles 2, three of the six damping bars identical to the integral damping bar 5 in shape are integral damping bars 5, and the remaining three damping bars are made of electro-conductive non-magnetically-conductive material. Two types of damping bars made of different materials are alternately arranged along a circumference. Two short circuit connecting pieces 4 are sleeved on the peripheries of the front and rear ends of the six damping bars respectively to construct one complete squirrel-cage damping winding. There is a gap between the pole shoe 22 integrally formed with the pole body 21 along a radial direction of the pole body 21 and the excitation winding 3 wound on the pole body 2, and the wing plate 52 on the single integral damping bar 5 is fixed in the gap. The excitation winding 3 on each rotor pole 2 moves along a peripheral direction of the rotary shaft under the action of a centrifugal force, so as to tightly fix the integral damping bar 5 between the pole shoe 22 and the excitation winding 3.

In another embodiment, two rotor poles 2 are disposed on the rotor iron core 1, that is, the rotor is a bipolar rotor, and the excitation winding 3 is wound on the pole body 21 of each rotor pole 2. One integral damping bar 5 is disposed between each two adjacent rotor poles 2, and two short circuit connecting pieces 4 are sleeved on the periphery of the front-back limiting portion 53 at the same side respectively to construct a complete squirrel-cage damping winding. The wing plates 52 at both sides of the single integral damping bar 5 are fixed between the pole shoes 22 of the rotor pole 2 and the excitation windings 3 at both sides respectively.

In another embodiment, four rotor poles 2 are disposed on the rotor iron core 1, that is, the rotor is a four-polar rotor, and the excitation winding 3 is wound on the pole body 21 of each rotor pole 2. One integral damping bar 5 is disposed between each two adjacent rotor poles 2, and two short circuit connecting pieces 4 are sleeved on the periphery of the front-back limiting portion 53 at the same side respectively to construct a complete squirrel-cage damping winding. The wing plates 52 on the single integral damping bar 5 are fixed between the pole shoes 22 of the rotor pole 2 and the excitation windings 3.

In this embodiment, an outer arc surface of the integral damping bar 5 and an outer arc surface of the rotor pole 2 are concentric. Preferably, The outer arc surface of the integral damping bar 5 is equal in radius to the outer arc surface of the rotor pole 2. The traditional low-rotation-speed constant frequency salient pole motor may produce a larger wind resistance than a circular rotor in a rotation process due to irregular outer edge, thus resulting in a larger noise. Therefore, the efficiency of the electric excitation synchronous motor will be adversely affected. This disadvantage will be further highlighted in the application of the electric excitation synchronous motor under a high-speed working condition. The integral damping bars 5 eliminate the disadvantage of irregular outer edge of the salient pole motor. Thus, a regular circular surface will help to reduce the winding resistance and the noise of the motor, and improve the efficiency of the motor at the same time.

### Embodiment 3

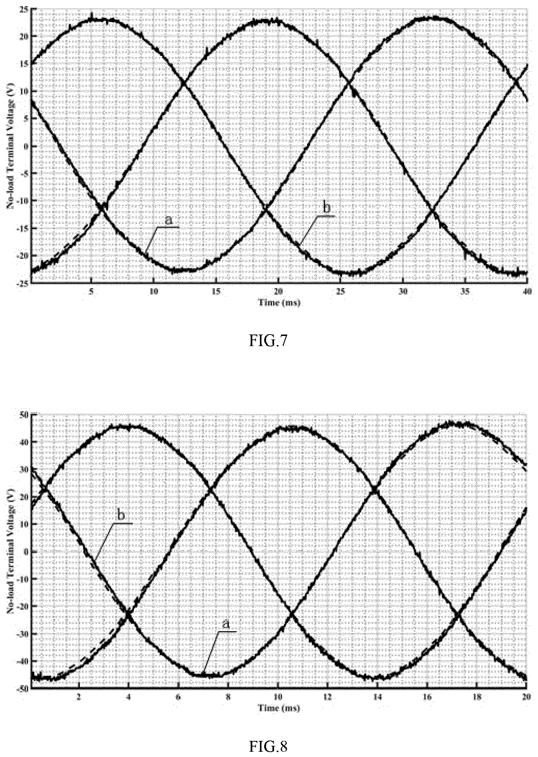

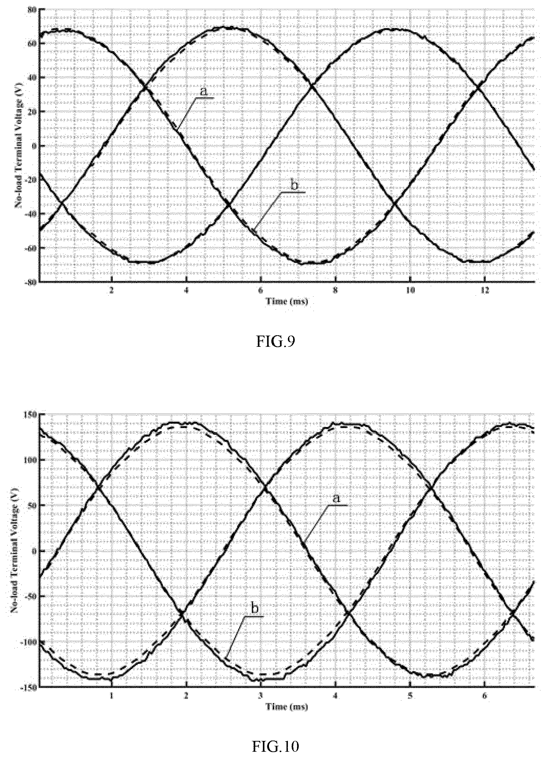

This embodiment provides a generator, which is of 250kVA, comprising a stator and the rotor applying the integral damping winding in embodiment 2. The rotor iron core 1 is made of M235-35A material, and the integral damping bar 5 is made of 17-4PH H900 material. Under the precondition that the stator adopts a skewed slot process, tests are performed at the speeds of 500r/min, 1000r/min, 1500r/min and 3000r/min according to the test method of GBT1029-2005 with the test results shown in FIGS. 7-9. FIGS. 7-9 are comparison diagrams of simulation value of output voltage of an integral damping winding at the speeds of 500r/min, 1000r/min, 1500r/min and 3000r/min and experimental test data, where the solid line of the numeral a refers to test data, the dotted line of the numeral b is simulation data. It can be seen from the drawings that the generator is in compliance with the stipulation that IEEE STD 519-2014 THD value is smaller than 5% in the rotation speed interval of 500-3000r/min.

### Embodiment 4

This embodiment provides a generator. The embodiment differs from the embodiment 3 in that the material of the integral damping bar in the embodiment is 17-4PH H1150. In this embodiment, under the precondition that the stator does not adopt a stator skewed slot process, tests are performed at the rotation speeds of 500r/min, 1000r/min, 1500r/min and 3000r/min according to the test method of GBT1029-2005. In combination with the material 17-4PH H900 of the integral damping bar 5 in the embodiment 3, tests are performed under the same condition with the test results shown in the following Table 1.

**Table 1 the THD values at different rotation speeds with the material of the integral damping bar 5 as 17-4PH H900 and 17-4PH H1150**

| | 500 r/min | 1000 r/min | 1500 r/min | 3000 r/min |
|---|---|---|---|---|
| 17-4PH H1150 | 2.4 2% | 1.72 % | 2.51 % | 3.42 % |
| 17-4PH H900 | 1.5 2% | 1.45 % | 1.33 % | 1.79 % |

It can be known from Table 1 that in the embodiment 4, when the generator is at the rotation speeds of 500r/min, 1000r/min, 1500r/min and 3000r/min, the THD values are 2.42%, 1.72%, 2.51% and 3.42%; in the embodiment 3, when the generator is at the rotation speeds of 500r/min, 1000r/min, 1500r/min and 3000r/min, the THD values are 1.52%, 1.45%, 1.33% and 1.79%. In the 250kVA six-pole generator with the rotor material being M235-35A, the integral damping bar 5 with the material 17-4PH H900 is superior in performance to the motor with the material 17-4PH H1150.

### Embodiment 5

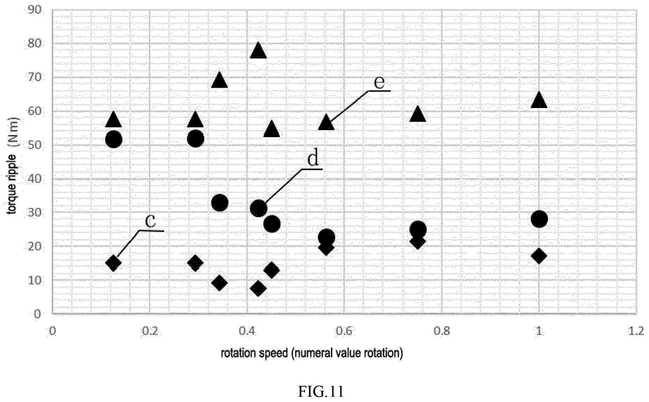

This embodiment provides an electric motor, which is a variable-speed, variable-frequency synchronous electric excitation electric motor of 250kVA with its rotation speed interval being 0-20000 r/min, comprising a stator and the rotor applying the integral damping bar in the embodiment 2. The rotor iron core 1 is made of M235-35A material and the integral damping bar 5 is made of 17-4PH H900 material. Simulation is performed at the rotation speed of 1-20000 r/min according to the test method of GBT1029-2005. As shown in FIG. 11, the numeral d refers to the torque ripple of 2-3 short-pitch electric excitation synchronous motor adopting stator skewed slot process under different rotation speed working conditions; the numeral c refers to the torque ripple of 2-3 short-pitch electric excitation synchronous motor adopting the integral damping winding under different rotation speed working conditions, where the material of the integral damping bar 5 is 17-4PH H900; the numeral e refers to the torque ripple of 2-3 short-pitch electric excitation synchronous motor adopting the integral damping winding under different rotation speed working conditions where the material of the integral damping bar 5 is C18150. Adoption of the stator skewed slot process is a conventional technical approach for reducing the torque ripple of the motor under different rotation speed working conditions. Thus, it is inferred that the torque ripple of the 2-3 short-pitch electric excitation synchronous motor under different rotation speed working conditions is greater than the torque ripple of the numeral d under different rotation speed working conditions and even larger than the torque ripple of the numeral c under different rotation speed working conditions. It is known from FIG. 11 that the air gap magnetic field of the salient pole electric excitation motor assembled with the integral damping bar 5 has fewer sinusoidal harmonic waves than the air gap magnetic field of the traditional synchronous electric excitation motor. The torque generated by the motor is in direct proportion to the current and the air gap magnetic field of the motor. Theoretically, under the precondition of inputting the same current, the motor with more sinusoidal air gap magnetic field will have smaller harmonic torque and smaller torque ripple.

### Control embodiment 1

This control embodiment provides a generator which is of 250kVA comprising a stator and the rotor applying the integral damping winding in the embodiment 2. The rotor iron core 1 is made of M235-35A material. The control embodiment differs from the embodiment 3 in that the material of the integral damping bar 5 in the control embodiment is magnetically-conductive copper material which is C18150. In the control embodiment and the embodiment 3, under the precondition that the stator adopts the stator skewed slot process, simulation tests are performed at the rotation speeds of 500r/min, 1000r/min, 1500r/min and 3000r/min according to the test method of GBT1029-2005, with the test results shown in Table 2 below in combination with embodiment 3.

**Table 2 the THD values at different rotation speeds with the material of the integral damping bar 5 as C18150 and 17-4PH H900**

| | 500 r/min | 1000 r/min | 1500 r/min | 3000 r/min |
|---|---|---|---|---|
| C18150 | 1.35 % | 1.79 % | 2.94 % | 3.58 % |
| 17-4PH H900 | 1.11 % | 0.97 % | 1.05 % | 0.99 % |

It can be known from Table 2 that in the embodiment 3, when the generator is at the rotation speeds of 500r/min, 1000r/min, 1500r/min and 3000r/min, the THD values are 1.11%, 0.97%, 1.05% and 0.99%; in the control embodiment 1, when the generator is at the rotation speeds of 500r/min, 1000r/min, 1500r/min and 3000r/min, the THD values are 1.35%, 1.79%, 2.94% and 3.58%. In the 250kVA six-pole generator with the rotor material being M235-35A, the motor with the material of the integral damping bar 5 being 17-4PH H900 has a smaller fluctuation of THD value in different rotation speed intervals than the motor with the material of the integral damping bar 5 being non-magnetically conductive.

### Control embodiment 2

The control embodiment provides an electric motor applying an integral damping winding rotor, which is a 250kVA generator comprising a stator and the rotor applying the integral damping winding in embodiment 2. The rotor iron core 1 is made of M235-35A and the integral damping bar 5 is made of C18150. Simulation is performed under the condition of 0-1 numeral values rotation per minute according to the test method of GBT1029-2005.

As can be seen from FIG. 11, the torque ripple of the synchronous excitation motor assembled with 17-4PH H900 integral damping winding is smaller than that of the synchronous excitation motor without the integral damping winding, and the torque ripple of the motor assembled with the integral damping bar made of electroconductive and non-magnetically conductive material in control embodiment 2 is greater than that of the motor with the 17-4PH H900 damping bar. Thus, the integral damping bar made of 17-4PH H900 has the effect of reducing the torque ripple.

Above descriptions are made to the preferred embodiments of the present invention and shall not be understood as limiting of the claims. The present invention is not limited to the above embodiments and allows changes to specific structure. Various changes made within the scope of protection claimed by the appended claims shall fall within the scope of protection of the present invention.

### List of referenence numerals in the drawings

- 1: rotor iron core
- 2: rotor pole
- 21: pole body
- 22: pole shoe
- 3: excitation winding
- 4: short circuit connecting piece
- 5: integral damping bar
- 51: left-right limiting portion
- 52: wing plate
- 53: front-back limiting portion.

## Claims

1. An integral damping winding, comprising two short circuit connecting pieces (4) and at least two integral damping bars (5), wherein all integral damping bars (5) are mounted between two adjacent rotor poles (2) respectively, and two ends of each of the integral damping bars (5) is connected with the short circuit connecting pieces (4) respectively, and the integral damping bar (5) is made of a conductive soft magnetic material.

2. The integral damping winding of claim 1, wherein a single integral damping bar (5) comprises a left-right limiting portion (51), two wing plates (52) and two front-back limiting portions (53); the wing plates (52) are disposed at both sides of the left-right limiting portion (51) respectively and the front-back limiting portions (53) are disposed at front and rear ends of the wing plates (52) or the left-right limiting portion (51) respectively.

3. The integral damping winding of claim 2, wherein the wing plate (52) is fixed between an excitation winding (3) and a pole shoe (22) of the rotor pole (2).

4. The integral damping winding of claim 2, wherein an arc-shaped surface matching with a surface of the rotor pole (2) is disposed on an upper surface of the left-right limiting portion (51).

5. The integral damping winding of claim 1, wherein the conductive soft magnetic material comprises martensitic stainless steel or electrical steel.

6. A rotor, comprising a rotor iron core (1), wherein it further comprises an integral damping winding of any one of claims 1-5; an even number of rotor poles (2) are disposed on the rotor iron core (1), and an excitation winding (3) is disposed on each rotor pole (2), a plurality of integral damping bars (5) are disposed between two adjacent rotor poles (2) respectively, and two short circuit connecting pieces (4) are disposed at front and rear ends of the rotor iron core (1) respectively.

7. The rotor of claim 6, wherein a magnetic induction intensity of the integral damping bar (5) under any magnetic field intensity should always be smaller than a magnetic induction intensity of the rotor iron core (1) under the magnetic field intensity.

8. The rotor of claim 6, wherein in a BH linear interval of the rotor iron core (1), a magnetic permeability of the integral damping bar (5) should always be smaller than a magnetic permeability of the rotor iron core (1).

9. A motor, comprising a stator and a rotor of any one of claims 6-8, and an integral damping bar is used to mount the rotor inside the stator.

10. The motor of claim 9, wherein the motor is a variable-speed, variable-frequency synchronous electric excitation motor with a rotation speed interval between 0-20000 r/min.
